# EUROPEAN PATENT SPECIFICATION

(11) **EP 4 503 282 B1**
(45) Date of publication and mention of the grant of the patent: **19.08.2026**
(21) Application number: 23780511.4
(22) Date of filing: 28.03.2023
(51) Int. Cl.: H01M 50/204, H01M 10/613, H01M 10/637, H01M 10/643, H01M 10/6554, H01M 50/213, H01M 50/224, H01M 10/48

(54) **BATTERY PACK**
BATTERIEPACK
BLOC-BATTERIE

(30) Priority: 31.03.2022 JP 2022059044
(43) Date of publication of application: 05.02.2025
(73) Proprietor: HONDA MOTOR CO., LTD., Tokyo 105-8404 (JP)
(72) Inventor: KOBAYASHI Hiroto, Wako-shi, Saitama 351-0193 (JP); ITO Keiichi, Tokyo 107-8556 (JP); KONDO Keita, Wako-shi, Saitama 351-0193 (JP); TABUCHI Yuya, Wako-shi, Saitama 351-0193 (JP)
(74) Representative: Dehns
(86) International application number: PCT/JP2023/012486
(87) International publication number: WO 2023/190502

(56) References cited:
- WO-A1-2020/071394
- JP-A- 2013 026 116
- JP-A- 2016 081 771
- US-A1- 2021 028 502
- US-A1- 2021 050 636
- US-A1- 2022 029 214

## Description

### TECHNICAL FIELD

The present invention relates to a battery pack including a temperature detecting portion capable of detecting the temperature of battery cells accommodated in a case.

### BACKGROUND ART

The present applicant has proposed in JP 6790176 B1 a battery pack that is mounted in an attachable and detachable manner on an electric vehicle such as an electric assist bicycle and an electric motorcycle. A battery pack is provided with a battery core pack having a plurality of battery cells and a case for accommodating the battery core pack.

In general, a battery pack includes a plurality of battery cells arranged in a battery core pack and a temperature sensor capable of detecting the temperature of the battery cells. The maximum and minimum temperatures in the battery core pack are sensed by a temperature sensor. When the temperature in the battery core pack detected by the temperature sensor is likely to exceed a reference temperature, charging of the battery pack is stopped to protect the battery pack. US 2021/028502, US 2021/050636 and US 2022/029214 disclose battery packs comprising thermistors to detect the temperature of an outer cell and a central cell of the battery pack.

### SUMMARY OF THE INVENTION

In a battery pack having a plurality of battery cells, when the minimum temperature of the battery cells and the maximum temperature of the battery cells are detected, it is necessary to arrange a plurality of temperature sensors in accordance with the plurality of battery cells that are placed at different locations. Costs increase because many temperature sensors are prepared.

A battery pack comprising a first battery core pack including a plurality of battery cells, and a second battery core pack including a plurality of battery cells and a case that accommodates the first battery core pack and the second battery core pack, wherein each plurality of battery cells are arranged in parallel in a first direction that is an axial direction of the case and is orthogonal to a cell axial direction of the plurality of battery cells, and the first battery core pack and the second battery core pack are arranged in parallel in the cell axial direction,
the battery pack includes a temperature detection unit configured to detect a temperature of the battery cell,
the temperature detection unit includes a first temperature sensor attached to, among the plurality of battery cells of the first battery core pack, a central battery cell that is placed at a center in the first direction,
a second temperature sensor attached to, among the plurality of battery cells of the second battery core pack, an end battery cell that is placed at one end portion in the first direction, and
a temperature sensor is not attached to, among the plurality of battery cells of the first and second battery core pack, a battery cell that is placed at another end portion in the first direction.

According to the present invention, it is possible to detect the maximum temperature of the battery pack near the center in the first direction where heat is likely to be trapped, by detecting the temperature of the central battery cell among the battery cells with the first temperature sensor of the temperature detection unit. By detecting the temperature of the end battery cell among the battery cells with the second temperature sensor, it is possible to detect the minimum temperature of the battery pack near one end portion in the first direction where heat relatively easily dissipates. Thus, the maximum and minimum temperatures in the battery pack can be detected with the first and second temperature sensors, which are minimal two temperature sensors, and thus the battery pack can be protected effectively at low cost.

### BRIEF DESCRIPTION OF THE DRAWINGS

[FIG. 1] FIG. 1 is an external perspective view of a battery pack according to an embodiment of the present invention.
[FIG. 2] FIG. 2 is a schematic front view of the battery pack of FIG. 1 as seen from the front.
[FIG. 3] FIG. 3 is a schematic side view of the battery pack of FIG. 1 as seen from the side.
[FIG. 4] FIG. 4 is a schematic side view showing a battery core pack according to a modified example.

### DETAILED DESCRIPTION OF THE INVNETION

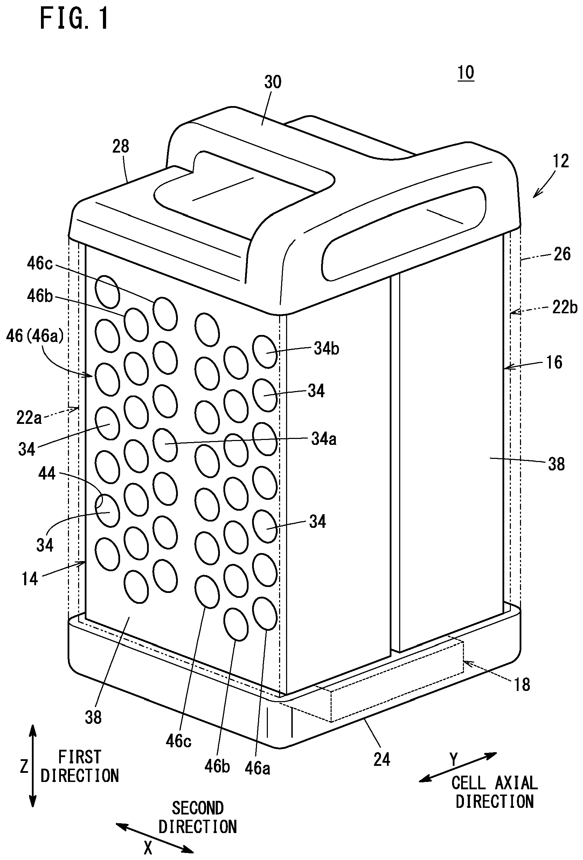

As shown in FIG. 1, a battery pack 10 according to the present embodiment can be applied as a portable battery pack that is mounted in an attachable and detachable manner in an electric vehicle (not shown) such as an electric assist bicycle or an electric motorcycle. The battery pack 10 can be applied to various external devices that require power. An example in which the battery pack 10 is mounted in an electric vehicle will be described below. The up-down direction of the battery pack 10 is the vertical direction when the battery pack 10 is mounted in an electric vehicle, or a direction inclined with respect to the vertical direction.

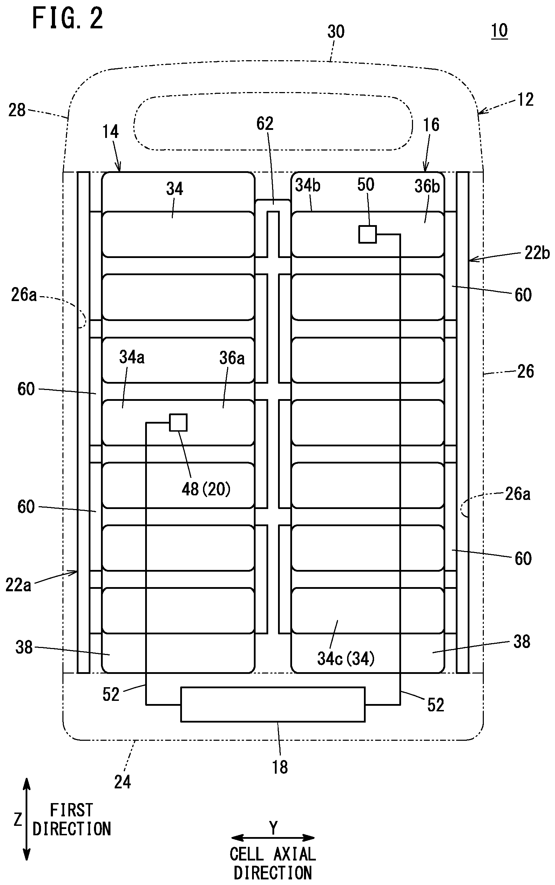

As shown in FIG. 1, the battery pack 10 includes a case 12, first and second battery core packs 14, 16, and a battery management unit (BMU) 18, a temperature detection unit 20 (see FIG. 2), and heat dissipation sheets 22a, 22b.

The case 12 accommodates the first and second battery core packs 14, 16 including a plurality of battery cells 34 and also accommodates the battery management unit 18. The case 12 has a bottom case 24, an outer case 26, and a top case 28. The axial direction of the case 12 shown in FIG. 1 is referred to as arrow Z direction or first direction, hereinafter.

The bottom case 24 is placed at a lower part of the case 12. The bottom case 24 covers the bottom of the first and second battery core packs 14, 16. The outer case 26 is formed in a hollow shape from a metal material such as aluminum and is attached to an upper end portion of the bottom case 24. The outer case 26 covers side surfaces of the first and second battery core packs 14, 16. The top case 28 is attached to an upper end portion of the outer case 26. The top case 28 covers an upper portion of the first and second battery core packs 14, 16. An upper portion of the top case 28 is provided with a handle 30. The handle 30 is graspable by a user when the user carries the battery pack 10.

As shown in FIGS. 1 and 2, the first and second battery core packs 14, 16 are formed in a substantially identical shape. The first battery core pack 14 and the second battery core pack 16 are coupled to each other by a coupling body (not shown) in a direction (arrow Y direction) orthogonal to the axial direction (first direction) of the case 12.

The first and second battery core packs 14, 16 each have the battery cells 34 and cell holders 38.

As shown in FIG. 2, each battery cell 34 is cylindrical in shape extending along a cell axial direction (arrow Y direction) orthogonal to the first direction (arrow Z direction) of the case 12. A positive electrode terminal is arranged at one end of each battery cell 34 in the cell axial direction. A negative terminal is arranged at the other end of each battery cell 34 in the cell axial direction. The battery cell 34 is, for example, a lithium secondary battery that can be repeatedly charged and discharged.

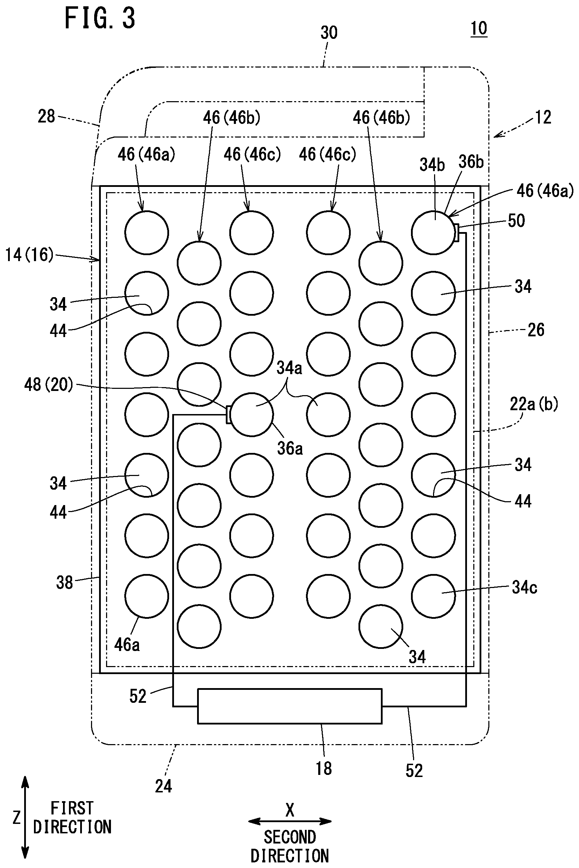

The cell holder 38 has a plurality of insertion holes 44. The plurality of insertion holes 44 are circular when viewed from the cell axial direction shown in FIG. 3. The battery cells 34 are inserted and held in the plurality of insertion holes 44.

As shown in FIG. 3, the cell holder 38 has a first direction column 46 in which seven insertion holes 44 are arranged along the first direction (arrow Z direction), and the insertion holes 44 constituting the first direction column 46 are equally spaced apart along the first direction (arrow Z direction). A plurality of first direction columns 46 are arranged in parallel with a space in a second direction (arrow X direction), which is the width direction of the cell holder 38. Each of the first direction columns 46 is arranged in parallel in the second direction (arrow X direction). An example in which six first direction columns 46 are arranged in the cell holder 38 as shown in FIG. 3 will be described below.

Among the six first direction columns 46, a pair of middle columns 46b adjacent to the second-direction inner side of a pair of end portion columns 46a are arranged so as to be shifted downward along the first direction with respect to the pair of end portion columns 46a adjacent to both ends in the second direction (arrow X direction). A pair of central columns 46c are positioned adjacent to the second-direction inner side of the pair of middle columns 46b. The pair of central columns 46c are arranged so as to be shifted upward along the first direction with respect to the middle columns 46b. In the first direction, the pair of end portion columns 46a and the pair of central columns 46c are in the same position. That is, the first direction columns 46 adjacent to each other in the second direction is arranged in a staggered way in the first direction.

The battery cells 34 are inserted into the insertion holes 44, respectively, thereby being arranged in parallel at equal intervals along the first direction of the cell holder 38 (see FIGS. 2 and 3). The battery cells 34 are arranged in parallel at equal intervals along the second direction of the cell holder 38 (see FIG. 3). The number of battery cells 34 and the number of insertion holes 44 are equal.

As shown in FIG. 2, the first battery core pack 14 and the second battery core pack 16 are arranged in parallel in the cell axial direction (arrow Y direction) of the battery cell 34. The number and arrangement of the battery cells 34 in the first battery core pack 14 are identical to the number and arrangement of the battery cells 34 in the second battery core pack 16.

In each of the first and second battery core packs 14, 16, the battery cells 34 are connected in parallel and in series by a plurality of bus bars 60. The bus bars 60 are connected to the battery management unit 18, which will be described later, via lead wires. In the first and second battery core packs 14, 16, the bus bars 60 are placed facing the outer case 26. The first battery core pack 14 and the second battery core pack 16 are connected by a bus bar 62.

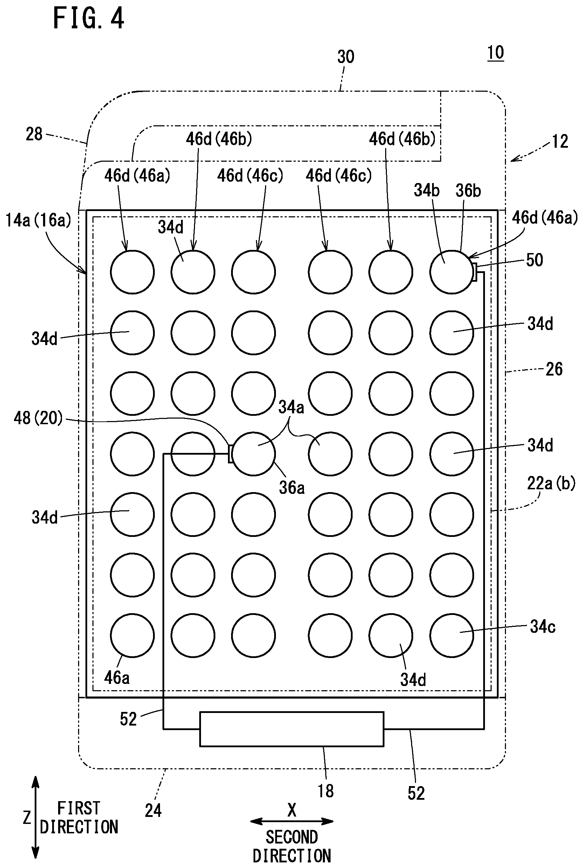

It should be noted that the battery cells 34 in the first and second battery core packs 14, 16 are not limited to the case where the adjacent first direction columns 46 are staggered in the first direction as shown in FIG. 3. For example, as in the first and second battery core packs 14a, 16a shown in FIG. 4, in the second direction (arrow X direction), all the first direction columns 46d may be aligned in the first direction, and a plurality of battery cells 34d may be arranged in the insertion holes 44 of the first direction columns 46d.

As shown in FIGS. 1-3, the battery management unit 18 controls charging and discharging of the first and second battery core packs 14, 16 and communicates with the electric vehicle. The battery management unit 18 is connected to each battery cell 34 of the first and second battery core packs 14, 16 via lead wires (not shown). The power of the battery cells 34 is supplied from the battery management unit 18 to the electric vehicle via a connector portion (not shown).

As shown in FIGS. 2 and 3, the temperature detection unit 20 is provided for the purpose of detecting the temperature of some of the battery cells 34. The temperature detection unit 20 has a first temperature sensor 48 and a second temperature sensor 50. The first and second temperature sensors 48, 50 are, for example, thermocouples or the like. The first and second temperature sensors 48, 50 are connected to the battery management unit 18 via lead wires 52, respectively.

The first temperature sensor 48 is placed in the first battery core pack 14. The first temperature sensor 48 is capable of detecting the maximum temperature that is highest within the first battery core pack 14. The first temperature sensor 48 is placed near the center of the first battery core pack 14 in the first and second directions. The vicinity of the center of the first battery core pack 14 is a region where heat generated at the battery cells 34 is trapped and thus the temperature tends to reach the maximum.

The first temperature sensor 48 is attached to a central battery cell 34a. The central battery cell 34a is, among the battery cells 34, one battery cell that is arranged at the center in the first direction (arrow Z direction) and arranged in the central column 46c that is placed at the center in the second direction (arrow X direction). When an even number of battery cells 34 are arranged in the first and second directions, the central battery cell 34a is one of two battery cells 34 arranged near the center in the first direction and one of two battery cells 34 arranged near the center in the second direction.

As shown in FIG. 2, the first temperature sensor 48 is located at the center of the central battery cell 34a in the cell axial direction (arrow Y direction). The first temperature sensor 48 is mounted on an outer peripheral surface 36a of the central battery cell 34a (see FIG. 3). The first temperature sensor 48 is attached to one of the pair of central battery cells 34a that are arranged in the pair of central columns 46c.

The temperature near the center of the first battery core pack 14 can be detected by the first temperature sensor 48 mounted on the central battery cell 34a. The temperature of the central battery cell 34a is detected by the first temperature sensor 48 and then output as a detection signal to the battery management unit 18 via the lead wire 52.

The second temperature sensor 50 is placed at the second battery core pack 16. The second temperature sensor 50 is capable of detecting a minimum temperature that is the lowest in the second battery core pack 16. The second temperature sensor 50 is placed near an end portion of the second battery core pack 16 in the first and second directions. The vicinity of the end portion of the second battery core pack 16 is a site where the heat generated at the battery cells 34 easily dissipates to the outside and thus the temperature tends to reach the minimum.

The second temperature sensor 50 is attached to an end battery cell 34b. The end battery cell 34b is, among the battery cells 34 of the second battery core pack 16, a single battery cell that is arranged at the uppermost portion, which is an end portion in the first direction, and is also arranged in the end portion column 46a in the second direction. As shown in FIG. 2, the second temperature sensor 50 is placed at the center of the end battery cell 34b in the cell axial direction. The second temperature sensor 50 is mounted on an outer peripheral surface 36b of the end battery cell 34b (see FIG. 3). In the second direction, a second temperature sensor 50 is attached to one of a pair of end battery cells 34b arranged in a pair of end portion columns 46a.

The temperature near first-direction and second direction end portions of the second battery core pack 16 can be detected by the second temperature sensor 50 mounted on the end battery cell 34b. The temperature of the end battery cell 34b is detected by the second temperature sensor 50 and then output as a detection signal to the battery management unit 18 via the lead wire 52.

At this time, the second temperature sensor 50 is not attached to, among the battery cells 34 of the second battery core pack 16, the end battery cell 34c that is placed at a lowermost end portion, which is the end portion in the first direction (arrow Z direction).

It should be noted that the present invention is not limited to the case where the second temperature sensor 50 is attached to the battery cell 34 (end battery cell 34b) placed at the uppermost position in the first direction. Instead of the end battery cells 34b, the second temperature sensor 50 may be mounted on the battery cell 34 (end battery cell 34c) that is arranged at the lowermost position in the end portion column 46a.

Only two temperature sensors, i.e., the first temperature sensor 48 and the second temperature sensor 50, are provided to detect the temperature of the battery cells 34 in the battery pack 10. The first temperature sensor 48 may be attached to the central battery cell 34a of the second battery core pack 16 and the second temperature sensor 50 may be attached to the end battery cell 34b of the first battery core pack 14. It is sufficient that the first and second temperature sensors 48, 50 are attached to either the first battery core pack 14 or the second battery core pack 16, respectively. Both the first and second temperature sensors 48, 50 may be attached to the first battery core pack 14. Both the first and second temperature sensors 48, 50 may be attached to the second battery core pack 16.

As shown in FIGS. 1 and 2, the heat dissipation sheets 22a, 22b are placed between the outer case 26 and the first and second battery core packs 14, 16, respectively. The heat dissipation sheets 22a, 22b are, for example, sheet-like members having high thermal conductivity.

When viewed from the cell axial direction of the battery cells 34 shown in FIG. 3, for a cell group including all the battery cells 34, the first dimension of the heat dissipation sheets 22a, 22b along the first direction (arrow Z direction) is larger than or equal to the dimension of the cell group along the first direction, and the second dimension of the heat dissipation sheets 22a, 22b along the second direction (arrow X direction) is larger than or equal to the dimension of the cell group along the second direction. When viewed from the direction shown in FIG. 3, the outer peripheral edges of the heat dissipation sheets 22a and 22b are arranged further outside than the cell group. That is, all the battery cells 34 in the first and second battery core packs 14, 16 are covered by the heat dissipation sheets 22a, 22b, respectively.

The heat dissipation sheets 22a, 22b are in contact with an inner wall 26a of the outer case 26. In the cell axial direction (arrow Y direction) of the battery cell 34, the heat dissipation sheets 22a, 22b are arranged between the inner wall 26a of the outer case 26 and the bus bar 60. The heat dissipation sheet 22a is in contact with the bus bar 60 of the first battery core pack 14 in the cell axial direction. The heat dissipation sheet 22b is in contact with the bus bar 60 of the second battery core pack 16 in the cell axial direction. The heat dissipation sheets 22a, 22b can transfer heat generated at the battery cells 34 from the bus bars 60 of the first and second battery core packs 14, 16 to the outer case 26.

Next, a case where the battery pack 10 is used will be described. A user grasps the handle 30 and carries the battery pack 10 to the vicinity of the charging device, and connects the connector portion with the charging device. This allows charging of each battery cell 34. On the other hand, for example, the user carries the battery pack 10 by grasping the handle 30, mounts the battery pack 10 in the electric vehicle, and connects the connector portion and a power supply port (not shown) with each other, whereby each battery cell 34 can be discharged.

When each battery cell 34 of the first and second battery core packs 14, 16 is charged or discharged, each battery cell 34 generates heat. The heat in each battery cell 34 of the first and second battery core packs 14, 16 raises the internal temperature of the case 12.

At this time, the temperature of the central battery cell 34a of the first battery core pack 14 is detected by the first temperature sensor 48. The central battery cell 34a is placed at the center of the first battery core pack 14 in the first and second directions, where heat tends to be trapped. Therefore, the temperature detected by the first temperature sensor 48 is the maximum temperature of the first battery core pack 14.

The temperature of the end battery cells 34b of the second battery core pack 16 is detected by the second temperature sensor 50. The end battery cells 34b are placed at end portions of the second battery core pack 16 in the first and second directions, where heat relatively easily dissipates. Therefore, the temperature detected by the second temperature sensor 50 is the lowest temperature of the second battery core pack 16.

The temperatures detected by the first and second temperature sensors 48, 50 are output as detection signals to the battery management unit 18 via the lead wires 52, respectively.

The operation control of the battery pack 10 is performed based on the maximum temperature of the first battery core pack 14 detected by the first temperature sensor 48 and the minimum temperature of the second battery core pack 16 detected by the second temperature sensor 50.

In the battery management unit 18, a temperature set beforehand is compared with the maximum temperature detected by the first temperature sensor 48, and when the maximum temperature is close to the set temperature, for example, charging of the battery pack 10 is stopped to protect the battery pack 10.

Heat generated at each battery cell 34 is transferred from a cell-axial-direction end face of the first and second battery core packs 14, 16 to the heat dissipation sheets 22a, 22b. Heat is transferred from the heat dissipation sheets 22a, 22b to the outer case 26. Thus, the heat generated at each battery cell 34 dissipates to the outside through the outer case 26 made of a metal material.

As described above, in the embodiment of the present invention, the temperature detection unit 20 of the battery pack 10 includes the first temperature sensor 48 attached to the central battery cell 34a, among the battery cells 34, that is placed at the center in the first direction, and the second temperature sensor 50 attached to the end battery cell 34b, among the battery cells 34, that is placed at one end portion in the first direction.

Thus, the maximum temperature of the battery pack 10 near the center in the first direction, where heat tends to be trapped, can be detected by detecting the temperature of the central battery cell 34a among the battery cells 34 with the first temperature sensor 48. By detecting the temperature of the end battery cell 34b among the battery cells 34 with the second temperature sensor 50, it is possible to detect the minimum temperature of the battery pack 10 near one end in the first direction, where heat is dissipated relatively easily.

As a result, the maximum temperature and the minimum temperature in the battery pack 10 can be detected with the minimum two first and second temperature sensors 48, 50, and thus the temperature protection of the battery pack 10 can be performed at low cost and effectively based on the detected maximum temperature and minimum temperature.

Among the battery cells 34 arranged in parallel along a second direction, the first temperature sensor 48 is placed at the central battery cell 34a placed at the center in the second direction, whereby the maximum temperature near the center in the second direction of the first battery core pack 14 can be reliably and effectively detected with the single first temperature sensor 48, at that place the temperature of the battery cells 34 tending to be trapped and thus the temperature tending to be high.

One battery cell 34 out of the battery cells 34 in the first battery core pack 14 is the central battery cell 34a where the first temperature sensor 48 is placed, and one battery cell 34 out of the battery cells 34 in the second battery core pack 16 is the end battery cell 34b where the second temperature sensor 50 is placed.

Thus, the maximum temperature can be detected near the center of the first battery core pack 14 with the first temperature sensor 48, and the minimum temperature can be detected near the end portion of the second battery core pack 16 with the second temperature sensor 50. Temperature sensing in the first and second battery core packs 14, 16 can be realized at lower cost and more effectively.

By placing the first temperature sensor 48 at the center of the central battery cell 34a in the cell axial direction, it is possible to reliably and effectively detect the temperature near the center of the central battery cell 34a in the cell axial direction with the first temperature sensor 48, at that place the temperature tending to be trapped and thus the temperature tending to be high.

By placing the second temperature sensor 50 at the center of the end battery cell 34b in the cell axial direction, it is possible to stably detect the temperature near the end battery cell 34b by detecting the temperature near the center of the end battery cell 34b in the cell axial direction with the second temperature sensor 50.

The battery pack has heat dissipation sheets 22a, 22b that touches the inner wall 26a of the outer case 26 formed from a metal material, and the heat dissipation sheets 22a, 22b are arranged in the cell axial direction with respect to the inner wall 26a and can transfer heat of the battery cells 34 to the outer case 26.

Thus, when the battery cells 34 generate heat, heat is transferred from the bus bar 60 to the outer case 26 made from a metal material via the heat dissipation sheets 22a, 22b, whereby when the amount of generated heat varies among the battery cells 34 due to the deterioration unique to each battery cell 34, the temperature variation among the battery cells 34 is equalized by the outer case 26 and the heat dissipation sheets 22a, 22b. Therefore, the equalized heat generation amount (temperature) of the battery cell 34 can be detected by the temperature detection unit 20 (the first and second temperature sensors 48, 50).

The first temperature sensor 48 is attached to the outer peripheral surface 36a of the central battery cell 34a whereas the second temperature sensor 50 is attached to the outer peripheral surface 36b of the end battery cells 34b. Thus, the first and second temperature sensors 48, 50 can be easily attached to the outer peripheral surfaces (36a, 36b) of the battery cells 34 of the existing battery pack. The first and second temperature sensors 48, 50 can be easily attached to the battery cells 34 (the central battery cell 34a and the end battery cell 34b) that have appropriately been selected among the battery cells 34.

When the battery cells 34 generate heat, if the heat generated by the battery cells 34 is uneven between the first battery core pack 14 and the second battery core pack 16, heat is transferred to the outer case 26 made from a metal material via the heat dissipation sheets 22a, 22b, whereby the temperature variation between the first battery core pack 14 and the second battery core pack 16 is equalized by the outer case 26. Therefore, the equalized heat generation amount (temperature) of the battery cells 34 can be stably detected with the first temperature sensor 48 placed at the first battery core pack 14 and the second temperature sensor 50 placed at the second battery core pack 16.

The above embodiments are summarized as follows.

The above embodiment is a battery pack (10) comprising a plurality of battery cells (34) and a case (12) that accommodates the plurality of battery cells, wherein the plurality of battery cells are arranged in parallel in a first direction that is an axial direction of the case and is orthogonal to a cell axial direction of the plurality of battery cells,
the battery pack comprising a temperature detection unit (20) that detects a temperature of the battery cell,
the temperature detection unit includes a first temperature sensor (48) attached to, among the plurality of battery cells, a central battery cell (34a) that is placed at a center in the first direction,
a second temperature sensor (50) attached to, among the plurality of battery cells, an end battery cell (34b) that is placed at one end portion in the first direction,
wherein a temperature sensor is not attached to, among the plurality of battery cells, a battery cell (34c) that is placed at another end portion in the first direction.

Inside the case, a plurality of battery cells are arranged in parallel along a second direction orthogonal to the cell axial direction and the first direction, and
the central battery cell is a battery cell that is placed at a center in the second direction among the plurality of battery cells that are arranged in parallel along the second direction.

The battery pack comprises a first battery core pack (14) including a plurality of battery cells, and a second battery core pack (16) including a plurality of battery cells,
one battery cell of the plurality of battery cells of the first battery core pack is the central battery cell at which the first temperature sensor is placed, and
one battery cell of the plurality of battery cells of the second battery core pack is the end battery cell at which the second temperature sensor is placed.

The first temperature sensor is placed at a center of the central battery cell in the cell axial direction.

The second temperature sensor is placed at a center of the end battery cell in the cell axial direction.

The battery pack comprises an outer case (26) formed of a metal material and constituting part of the case;
heat dissipation sheets (22a, 22b) that are in contact with an inner wall (26a) of the outer case, are arranged in the cell axial direction with respect to the inner wall, and transfer heat of the plurality of battery cells arranged in parallel along the first direction to the outer case.

The first temperature sensor is attached to an outer peripheral surface (36a) of the central battery cell, and
the second temperature sensor is attached to an outer peripheral surface (36b) of the end battery cell.

## Claims

1. A battery pack (10) comprising a first battery core pack (14) including a plurality of battery cells, and a second battery core pack (16) including a plurality of battery cells and a case (12) that accommodates the first battery core pack and the second battery core pack, wherein each plurality of battery cells are arranged in parallel in a first direction that is an axial direction of the case and is orthogonal to a cell axial direction of the plurality of battery cells, and the first battery core pack and the second battery core pack are arranged in parallel in the cell axial direction,
the battery pack comprising a temperature detection unit (20) configured to detect a temperature of the battery cell,
wherein
the temperature detection unit includes
a first temperature sensor (48) attached to, among the plurality of battery cells of the first battery core pack, a central battery cell (34a) that is placed at a center in the first direction, and
a second temperature sensor (50) attached to, among the plurality of battery cells of the second battery core pack, an end battery cell (34b) that is placed at one end portion in the first direction, and
a temperature sensor is not attached to, among the plurality of battery cells of the first and second battery core packs, a battery cell (34c) that is placed at another end portion in the first direction.

2. The battery pack according to claim 1, wherein
inside the case, a plurality of battery cells are arranged in parallel along a second direction orthogonal to the cell axial direction and the first direction, and
the central battery cell is a battery cell that is placed at a center in the second direction among the plurality of battery cells that are arranged in parallel along the second direction.

3. The battery pack according to any one of claims 1 or 2, wherein
the first temperature sensor is placed at a center of the central battery cell in the cell axial direction.

4. The battery pack according to any one of claims 1 to 3, wherein
the second temperature sensor is placed at a center of the end battery cell in the cell axial direction.

5. The battery pack according to any one of claims 1 to 4, further comprising
an outer case (26) formed of a metal material and constituting part of the case;
heat dissipation sheets (22a, 22b) that are in contact with an inner wall (26a) of the outer case, are arranged in the cell axial direction with respect to the inner wall, and are configured to transfer heat of the plurality of battery cells arranged in parallel along the first direction to the outer case.

6. The battery pack according to any one of claims 1 to 5, wherein
the first temperature sensor is attached to an outer peripheral surface (36a) of the central battery cell, and
the second temperature sensor is attached to an outer peripheral surface (36b) of the end battery cell.

## Patentansprüche

1. Batteriepack (10), umfassend ein erstes Batteriekernpaket (14) mit einer Vielzahl von Batteriezellen und ein zweites Batteriekernpaket (16) mit einer Vielzahl von Batteriezellen sowie ein Gehäuse (12), das das erste Batteriekernpaket und das zweite Batteriekernpaket aufnimmt, wobei jede Vielzahl von Batteriezellen in einer ersten Richtung parallel angeordnet ist, die eine Axialrichtung des Gehäuses ist und zu einer Zellachsenrichtung der Vielzahl von Batteriezellen orthogonal ist, und das erste Batteriekernpaket und das zweite Batteriekernpaket in der Zellachsenrichtung parallel angeordnet sind,
das Batteriepack eine Temperaturerfassungseinheit (20) umfasst, die ausgebildet ist, eine Temperatur der Batteriezelle zu erfassen,
wobei
die Temperaturerfassungseinheit Folgendes einschließt
einen ersten Temperatursensor (48), der unter der Vielzahl von Batteriezellen des ersten Batteriekernpakets an einer zentralen Batteriezelle (34a) angebracht ist, die in der ersten Richtung in einem Zentrum angeordnet ist, und
einen zweiten Temperatursensor (50), der unter der Vielzahl von Batteriezellen des zweiten Batteriekernpakets an einer endseitigen Batteriezelle (34b) angebracht ist, die in der ersten Richtung an einem Endabschnitt angeordnet ist, und
wobei unter der Vielzahl von Batteriezellen des ersten und des zweiten Batteriekernpakets an einer Batteriezelle (34c), die in der ersten Richtung an einem anderen Endabschnitt angeordnet ist, kein Temperatursensor angebracht ist.

2. Batteriepack nach Anspruch 1, wobei
innerhalb des Gehäuses eine Vielzahl von Batteriezellen entlang einer zweiten Richtung parallel angeordnet ist, die zu der Zellachsenrichtung und der ersten Richtung orthogonal ist, und
die zentrale Batteriezelle eine Batteriezelle ist, die unter der Vielzahl von Batteriezellen, die entlang der zweiten Richtung parallel angeordnet sind, in der zweiten Richtung in einem Zentrum angeordnet ist.

3. Batteriepack nach einem der Ansprüche 1 oder 2, wobei
der erste Temperatursensor in der Zellachsenrichtung in einem Zentrum der zentralen Batteriezelle angeordnet ist.

4. Batteriepack nach einem der Ansprüche 1 bis 3, wobei
der zweite Temperatursensor in der Zellachsenrichtung in einem Zentrum der endseitigen Batteriezelle angeordnet ist.

5. Batteriepack nach einem der Ansprüche 1 bis 4, weiter umfassend
ein Außengehäuse (26), das aus einem metallischen Material gebildet ist und einen Teil des Gehäuses bildet;
Wärmeableitungsfolien (22a, 22b), die mit einer Innenwand (26a) des Außengehäuses in Kontakt sind, in Bezug auf die Innenwand in der Zellachsenrichtung angeordnet sind und ausgebildet sind, Wärme der Vielzahl von Batteriezellen, die entlang der ersten Richtung parallel angeordnet sind, auf das Außengehäuse zu übertragen.

6. Batteriepack nach einem der Ansprüche 1 bis 5, wobei
der erste Temperatursensor an einer äußeren Umfangsoberfläche (36a) der zentralen Batteriezelle angebracht ist, und
der zweite Temperatursensor an einer äußeren Umfangsoberfläche (36b) der endseitigen Batteriezelle angebracht ist.

## Revendications

1. Bloc-batterie (10) comprenant un premier bloc-batterie central (14) incluant une pluralité de cellules de batterie, et un second bloc-batterie central (16) incluant une pluralité de cellules de batterie et un boîtier (12) qui reçoit le premier bloc-batterie central et le second bloc-batterie central, dans lequel chaque pluralité de cellules de batterie est disposée en parallèle dans une première direction qui est une direction axiale du boîtier et qui est orthogonale à une direction axiale de cellule de la pluralité de cellules de batterie, et le premier bloc-batterie central et le second bloc-batterie central sont disposés en parallèle dans la direction axiale de cellule,
le bloc-batterie comprenant une unité de détection de température (20) configurée pour détecter une température de la cellule de batterie,
dans lequel
l'unité de détection de température inclut
un premier capteur de température (48) fixé à, parmi la pluralité de cellules de batterie du premier bloc-batterie central, une cellule de batterie centrale (34a) qui est placée à un centre dans la première direction, et
un second capteur de température (50) fixé à, parmi la pluralité de cellules de batterie du second bloc-batterie central, une cellule de batterie d'extrémité (34b) qui est placée à une partie d'extrémité dans la première direction, et
un capteur de température n'est pas fixé à, parmi la pluralité de cellules de batterie des premier et second blocs-batterie centraux, une cellule de batterie (34c) qui est placée à une autre partie d'extrémité dans la première direction.

2. Bloc-batterie selon la revendication 1, dans lequel
à l'intérieur du boîtier, une pluralité de cellules de batterie sont disposées en parallèle le long d'une seconde direction orthogonale à la direction axiale de cellule et à la première direction, et
la cellule de batterie centrale est une cellule de batterie qui est placée à un centre dans la seconde direction parmi la pluralité de cellules de batterie qui sont disposées en parallèle le long de la seconde direction.

3. Bloc-batterie selon l'une quelconque des revendications 1 ou 2, dans lequel
le premier capteur de température est placé à un centre de la cellule de batterie centrale dans la direction axiale de cellule.

4. Bloc-batterie selon l'une quelconque des revendications 1 à 3, dans lequel
le second capteur de température est placé à un centre de la cellule de batterie d'extrémité dans la direction axiale de cellule.

5. Bloc-batterie selon l'une quelconque des revendications 1 à 4, comprenant en outre
un boîtier externe (26) formé d'un matériau métallique et constituant une partie du boîtier ;
des feuilles de dissipation thermique (22a, 22b) qui sont en contact avec une paroi interne (26a) du boîtier externe, sont disposées dans la direction axiale de cellule par rapport à la paroi interne, et sont configurées pour transférer la chaleur de la pluralité de cellules de batterie disposées en parallèle le long de la première direction au boîtier externe.

6. Bloc-batterie selon l'une quelconque des revendications 1 à 5, dans lequel
le premier capteur de température est fixé à une surface périphérique externe (36a) de la cellule de batterie centrale, et
le second capteur de température est fixé à une surface périphérique externe (36b) de la cellule de batterie d'extrémité.
